# EUROPEAN PATENT APPLICATION

(11) **EP 3 748 721 A1**
(43) Date of publication of application: **09.12.2020**
(21) Application number: 19747462.0
(22) Date of filing: 31.01.2019
(51) Int. Cl.: H01M 2/10, H01L 21/28, H01L 29/41, H01M 10/04

(54) **LAYERING TOOL, LAYERING METHOD, AND BATTERY STRUCTURE MANUFACTURING METHOD**

(30) Priority: 31.01.2018 JP 2018014738
(71) Applicant: Kabushiki Kaisha Nihon Micronics, Musashino-shi, Tokyo 180-8508 (JP)
(72) Inventor: ANDO Hidenori, Musashino-shi, Tokyo 180-8508 (JP); KIKUTA Makoto, Musashino-shi, Tokyo 180-8508 (JP)
(74) Representative: INNOV-GROUP
(86) International application number: PCT/JP2019/003310
(87) International publication number: WO 2019/151377

(57) **Abstract**

The present invention provides a technique for layering sheet-shaped cells. A layering method according to the present embodiment includes: a step of preparing a plurality of sheet-shaped cells (10), each of which having an opening (31); and a step of inserting a convex part (202) for alignment into the opening (31), thereby layering the plurality of sheet-shaped cells (10).

## Description

### Technical Field

The present invention relates to a technique for layering sheet-shaped cells.

### Background Art

Patent Literature 1 discloses a test apparatus for a sheet-shaped cell. The test apparatus disclosed in Patent Literature 1 uses a sheet roll in which a sheet-shaped cell is wound in a roll shape. The test apparatus includes a sheet supply unit that supplies a sheet from a sheet roll, a sheet folding mechanism unit that folds the sheet supplied from the sheet supply unit, and a sheet cutting unit that cuts the sheet.

### Citation List

### Patent Literature

Patent Literature 1: Japanese Unexamined Patent Application Publication No. 2016-33870

### Summary of Invention

### Technical Problem

When a sheet-shaped cell is cut from a sheet roll, the shape of the sheet-shaped cell is rectangular. It should be noted that sheet-shaped cells are used in a wide variety of applications. In particular, a sheet-shaped secondary cell may be used in a wearable device or the like for which a reduction in size is required or in a device or the like for which a reduction in thickness is required, such as a Point Of Purchase (POP) advertising and a direction board.

In particular, in an application requiring design qualities, a space for disposing the sheet-shaped cell may be restricted. As the shape of the sheet-shaped cell is determined by standards, it may be impossible to dispose the sheet-shaped cell in a space when there is a restriction on the space. Therefore, it is desirable to efficiently dispose the sheet-shaped cell inside an application in accordance with the design of the application.

Further, the cell capacity can be increased by layering a plurality of sheet-shaped cells. That is, the overall cell capacity can be increased by connecting a plurality of layered sheet-shaped cells to each other. When the sheet-shaped cells are layered, the sheet-shaped cells can be disposed more efficiently by aligning them.

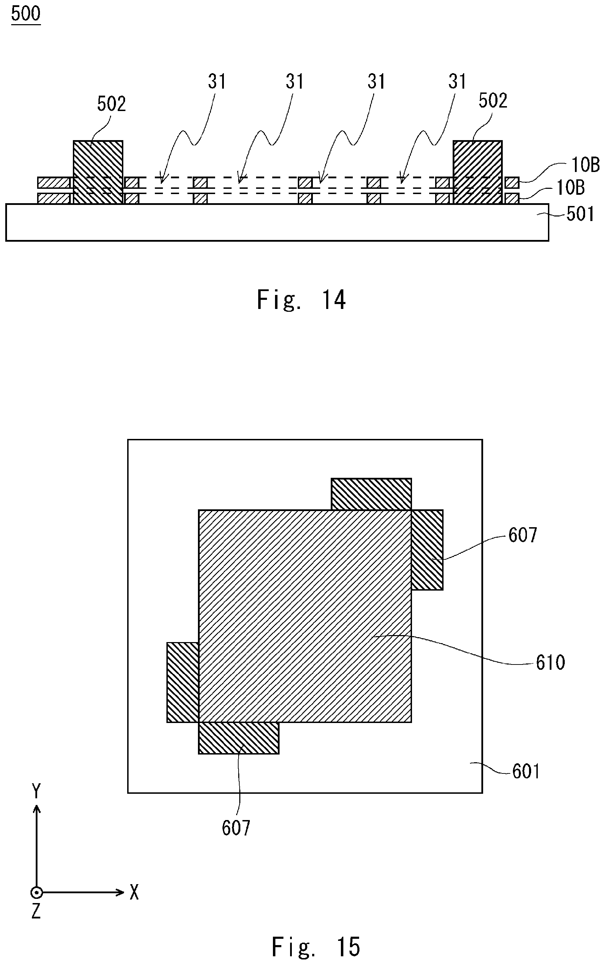

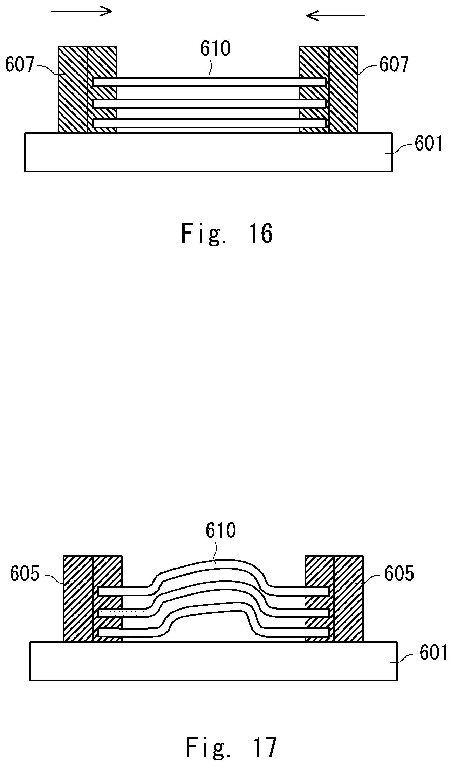

Problems that occur when alignment of a plurality of sheet-shaped cells is performed are described with reference to Figs. 15 and 16. Fig. 15 is a top view showing a structure for aligning a plurality of sheet-shaped cells with respect to the outer shape of the sheet-shaped cells, and Fig. 16 is a cross-sectional view thereof.

Two convex parts 607 are provided in a pedestal 601. The two convex parts 607 move closer to each other in the directions indicated by arrows shown in Fig. 16. Alignment can be performed by pressing the two convex parts 607 from both sides of a sheet-shaped cell 610. However, if the sheet-shaped cell is not strong, a deflection may occur as shown in Fig. 17. In such a case, an appropriate alignment cannot be performed.

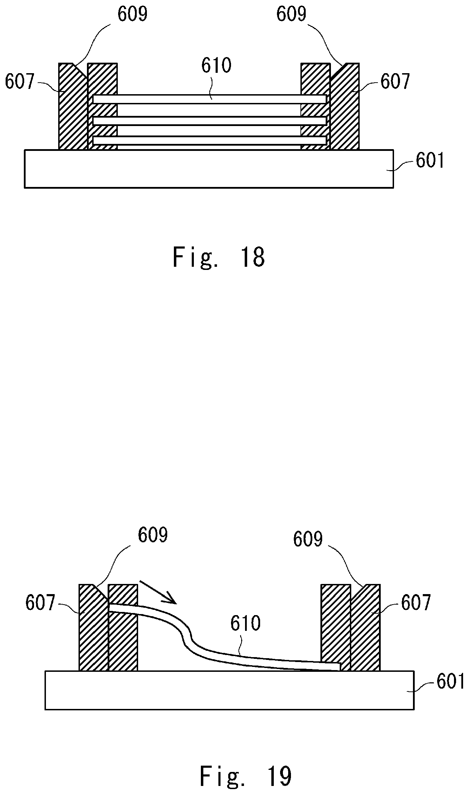

Alternatively, as shown in Fig. 18, a tapered part 609 can be provided in the convex part 607. In this case, the tapered part 609 drops sheet-shaped cells, so that alignment can be performed. However, in a case in which the sheet-shaped cell is not strong, a deflection may occur while the tapered part 609 is dropping the sheet-shaped cells as shown in Fig. 19. In such a case, an appropriate alignment cannot be performed.

An object of the present invention is to provide a technique for appropriately layering sheet-shaped cells.

### Solution to Problem

A method for layering sheet-shaped cells according to an aspect of the present embodiment includes: a step of preparing a plurality of sheet-shaped cells, each of the sheet-shaped cells having an opening; and a step of inserting a first convex part for alignment into the opening, thereby layering the plurality of sheet-shaped cells.

In the aforementioned method for layering sheet-shaped cells, in a plan view, the first convex part for alignment may have a shape corresponding to a shape of the opening.

In the aforementioned method for layering sheet-shaped cells, a plurality of the first convex parts for alignment may be inserted into the one opening.

In the aforementioned method for layering sheet-shaped cells, in a state in which the first alignment convex part is inserted into the opening, a second convex part for alignment may be provided at a position corresponding to an outer edge of the sheet-shaped cell, and alignment of the sheet-shaped cells may be performed by using the first and the second convex parts for alignment.

In the aforementioned method for layering sheet-shaped cells, a plurality of the openings may be provided in the sheet-shaped cell, and a plurality of the first convex parts for alignment may be inserted into the openings different from each other.

In the aforementioned method for layering sheet-shaped cells, the sheet-shaped cell includes: a substrate having a base part and the opening; a dividing line that surrounds the opening; an inner charging layer formed at the base part of an inner region of the dividing line and an outer charging layer formed at the base part of an outer region of the dividing line; and an electrode formed above the outer charging layer, and the outer and the inner charging layers are electrically insulated from each other by the dividing line.

A method for manufacturing a cell structure according to the present embodiment includes: layering a plurality of sheet-shaped cells by the aforementioned method for layering sheet-shaped cells so that the openings overlap each other; and housing the plurality of sheet-shaped cells in a case having a convex part inserted into the openings.

A layering jig according to the present embodiment includes a pedestal on which a plurality of sheet-shaped are placed, each of the sheet-shaped cells having an opening; and a convex part for alignment provided in the pedestal so that the convex part for alignment is inserted into the opening.

### Advantageous Effects of Invention

According to the present invention, it is possible to provide a technique for layering sheet-shaped cells.

### Brief Description of Drawings

Fig. 1 shows a basic cross-sectional structure of a sheet-shaped cell;
Fig. 2 is a plan view schematically showing a structure of the sheet-shaped cell;
Fig. 3 is a cross-sectional view taken along the line III-III of Fig. 2;
Fig. 4 is a cross-sectional view schematically showing a layered structure in which a plurality of sheet-shaped cells are layered;
Fig. 5 is a plan view schematically showing a structure of a layering jig according to a first embodiment;
Fig. 6 is a cross-sectional view schematically showing the structure of the layering jig according to the first embodiment;
Fig. 7 is a plan view schematically showing a structure of a layering jig according to a second embodiment;
Fig. 8 is a cross-sectional view schematically showing the structure of the layering jig according to the second embodiment;
Fig. 9 is a plan view schematically showing a structure of a layering jig according to a third embodiment;
Fig. 10 is a cross-sectional view schematically showing the structure of the layering jig according to the third embodiment;
Fig. 11 is a plan view showing a structure of a cell structure according to an example;
Fig. 12 is a plan view showing a structure of a sheet-shaped cell according to the example;
Fig. 13 is a plan view showing a structure of a layering jig according to the example;
Fig. 14 is a cross-sectional view showing the structure of the layering jig according to the example;
Fig. 15 shows a structure for performing alignment with respect to an outer shape;
Fig. 16 shows a structure for performing alignment with respect to the outer shape;
Fig. 17 shows a structure for performing alignment with respect to the outer shape;
Fig. 18 shows a structure for performing alignment by a tapered part dropping the sheet-shaped cells; and
Fig. 19 shows a structure for performing alignment by the tapered part dropping the sheet-shaped cells.

### Description of Embodiments

Hereinafter, examples of embodiments according to the present invention will be described with reference to the drawings. The following description is simply for preferable embodiments according to the present invention and is not intended to limit the scope of the present invention to the following embodiments.

### (Layered structure of secondary cell)

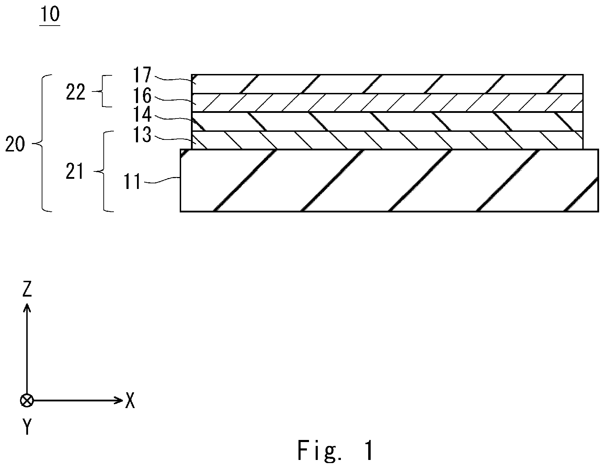

The basic structure of a secondary cell according to the present embodiment is described below with reference to Fig. 1. Fig. 1 shows a basic cross-sectional structure of the secondary cell. Note that for the clarification of the description, an XYZ three-dimensional orthogonal coordinate system is shown as appropriate throughout the drawings. The Z direction is the thickness direction (layering direction) of the sheet-shaped secondary cell (hereinafter referred to simply as the sheet-shaped cell), and the XY plane is a plane parallel to the sheet-shaped cell. Further, in the XY plane, the sheet-shaped cell has a rectangular shape, and the X direction and the Y direction are parallel to the end sides of the sheet-shaped cell.

In Fig. 1, a sheet-shaped cell 10 has a layered body 20 formed by layering an n-type oxide semiconductor layer 13, a charging layer 14, a p-type oxide semiconductor layer 16, and a second electrode 17 in this order on a substrate 11.

The substrate 11 is formed of a conductive material such as a metal and functions as a first electrode. In this embodiment, the substrate 11 is a negative electrode. For example, a metal foil sheet such as a SUS sheet or an aluminum sheet can be used as the substrate 11.

The substrate 11 made of an insulating material can be prepared to form the first electrode on the substrate 11. When the first electrode is formed on the substrate 11, a metal material such as chromium (Cr) or titanium (Ti) can be used as the material of the first electrode. An alloy film containing aluminum (Al), silver (Ag) or the like may be used as the material of the first electrode. When the first electrode is formed on the substrate 11, it can be formed by the same method as that in the second electrode 17 which is described later.

The first electrode can be formed by vapor phase film formation such as sputtering, ion plating, electron beam vapor deposition, vacuum vapor deposition, and chemical vapor deposition. Further, a metal electrode can be formed by an electrolytic plating method, a electroless plating method, or the like. As a metal used for plating, copper, copper alloy, nickel, aluminum, silver, gold, zinc, tin and the like can be generally used.

The n-type oxide semiconductor layer 13 is formed on the substrate 11. The n-type oxide semiconductor layer 13 contains an n-type oxide semiconductor material (a second n-type oxide semiconductor material). As the n-type oxide semiconductor layer 13, for example, titanium dioxide (TiO₂), tin oxide (SnO₂) or zinc oxide (ZnO) can be used. For example, the n-type oxide semiconductor layer 13 can form a film on the substrate 11 by sputtering or vapor deposition. Titanium dioxide (TiO₂) is preferably used as the material of the n-type oxide semiconductor layer 13.

The charging layer 14 is formed on the n-type oxide semiconductor layer 13. The charging layer 14 is formed of a mixture of an insulating material and an n-type oxide semiconductor material. For example, n-type oxide semiconductor particles can be used as the n-type oxide semiconductor material (a first n-type oxide semiconductor material) of the charging layer 14. The n-type metal oxide semiconductor becomes a layer having a charge function through a photoexcited structural change by irradiating it with ultraviolet rays. As an insulating material of the charging layer 14, a silicone resin can be used. For example, as the insulating material, it is preferable to use a silicon compound (silicone) having a main skeleton formed by a siloxane bond such as silicon oxide.

For example, the charging layer 14 is formed of silicon oxide and titanium dioxide, the latter being comprised of the first n-type oxide semiconductor material. In addition, as the n-type oxide semiconductor material which can be used in the charging layer 14, tin oxide (SnO₂) or zinc oxide (ZnO) is preferable. A combination of two or all of titanium dioxide, tin oxide, and zinc oxide can also be used.

The manufacturing process of the charging layer 14 is described. First, a coating liquid in which a solvent is mixed with a mixture of a precursor of titanium oxide, tin oxide or zinc oxide and silicone oil is prepared. A coating liquid in which fatty acid titanium and silicone oil are mixed in a solvent is prepared. Then, a coating liquid is applied onto the n-type oxide semiconductor layer 13 by a spin coating method, a slit coating method, or the like. By drying and burning the coating film, it is possible to form the charging layer 14 on the n-type oxide semiconductor layer 13. Note that as an example of the precursor, titanium stearate, which is a precursor of titanium oxide, can be used. Titanium oxide, tin oxide, and zinc oxide are formed by decomposition from aliphatic acid salt, which is a precursor of metal oxide. The charging layer 14, which has been dried and burned, may be irradiated with ultraviolet rays to be UV-cured.

Note that for titanium oxide, tin oxide, zinc oxide and the like, fine particles of an oxide semiconductor can be used without using a precursor. A liquid mixture is produced by mixing nanoparticles of titanium oxide or zinc oxide with silicone oil. Further, a coating liquid is produced by mixing a solvent with the liquid mixture. A coating liquid is applied onto the n-type oxide semiconductor layer 13 by a spin coating method, a slit coating method, or the like. The charging layer 14 can be formed by performing drying, burning and UV irradiation on the coating film.

The first n-type oxide semiconductor material contained in the charging layer 14 and the second n-type oxide semiconductor material contained in the n-type oxide semiconductor layer 13 may be the same as or different from each other. For example, when the n-type oxide semiconductor material contained in the n-type oxide semiconductor layer 13 is tin oxide, the n-type oxide semiconductor material of the charging layer 14 may be tin oxide or an n-type oxide semiconductor material other than tin oxide.

The p-type oxide semiconductor layer 16 is formed on the charging layer 14. The p-type oxide semiconductor layer 16 contains a p-type oxide semiconductor material. As a material of the p-type oxide semiconductor layer 16, nickel oxide (NiO), copper aluminum oxide (CuAlO₂), or the like can be used. For example, the p-type oxide semiconductor layer 16 is a nickel oxide film having a thickness of 400 nm. The p-type oxide semiconductor layer 16 is formed on the charging layer 14 by a film forming method such as vapor deposition or sputtering.

The second electrode 17 may be formed of a conductive film. Further, a metal material such as chromium (Cr) or copper (Cu) can be used as a material of the second electrode 17. As a metal material other than the aforementioned metal material, a silver (Ag) alloy containing aluminum (Al) and the like can be used. Examples of a forming method for the above include a vapor phase film formation such as sputtering, ion plating, electron beam vapor deposition, vacuum vapor deposition, and chemical vapor deposition. Further, a metal electrode can be formed by an electrolytic plating method, an electroless plating method, or the like. Copper, copper alloy, nickel, aluminum, silver, gold, zinc or tin can be generally used as a metal used for plating. For example, the second electrode 17 is an Al film having a thickness of 300 nm.

As described above, the layered body 20 includes the substrate 11, the n-type oxide semiconductor layer 13, the charging layer 14, the p-type oxide semiconductor layer 16, and the second electrode 17. Therefore, the second electrode 17 is disposed on the outermost surface of the sheet-shaped cell 10. The substrate (the first electrode) 11 and the n-type oxide semiconductor layer 13 form a negative electrode layer 21. The p-type oxide semiconductor layer 16 and the second electrode 17 form a positive electrode layer 22.

In the above description, the n-type oxide semiconductor layer 13 is disposed below the charging layer 14, and the p-type oxide semiconductor layer 16 is disposed above the charging layer 14. However, the n-type oxide semiconductor layer 13 and the p-type oxide semiconductor layer 16 may be disposed opposite to each other. That is, the n-type oxide semiconductor layer 13 may be disposed above the charging layer 14, and the p-type oxide semiconductor layer 16 may be disposed below the charging layer 14. In this case, the substrate 11 is a positive electrode and the second electrode 17 is a negative electrode. That is, the n-type oxide semiconductor layer 13 may be disposed above the charging layer 14 or the p-type oxide semiconductor layer 16 may be disposed above the charging layer 14 as long as the charging layer 14 is sandwiched between the n-type oxide semiconductor layer 13 and the p-type oxide semiconductor layer 16. In other words, the sheet-shaped cell 10 may have any structure as long as the first electrode (the substrate 11), a first conductivity type oxide semiconductor layer (the n-type oxide semiconductor layer 13 or the p-type oxide semiconductor layer 16), the charging layer 14, a second conductivity type semiconductor layer (the p-type oxide semiconductor layer 16 or the n-type oxide semiconductor layer 13), and the second electrode 17 are layered in this order.

Further, the sheet-shaped cell 10 may include layers other than the first electrode (the substrate 11), the first conductivity type oxide semiconductor layer (the n-type oxide semiconductor layer 13 or the p-type oxide semiconductor layer 16), the charging layer 14, the second conductivity type semiconductor layer (the p-type oxide semiconductor layer 16 or the n-type oxide semiconductor layer 13), and the second electrode 17.

The substrate 11 and the n-type oxide semiconductor layer 13 comprise the negative electrode layer 21. The p-type oxide semiconductor layer 16 and the second electrode 17 comprise the positive electrode layer 22. In the layered body 20 shown in Fig. 1, some layers may be omitted, or other layers may be added. Specifically, it is sufficient for the layered body 20 to include at least a positive electrode, a negative electrode, and a charging layer. Accordingly, the negative electrode layer 21 may include only the substrate 11 or may include layers other than the substrate 11. Further, the positive electrode layer 22 may include only the second electrode 17 or may include layers other than the second electrode 17.

### (Structure of sheet-shaped cell)

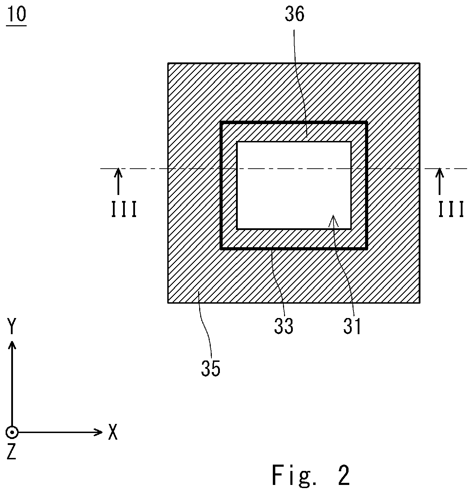

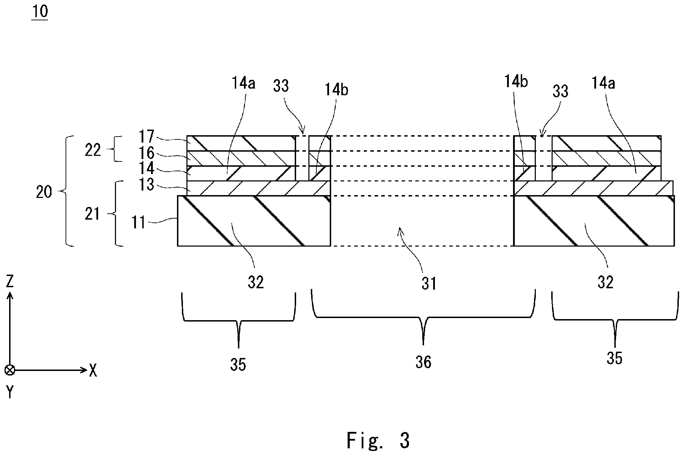

The structure of the sheet-shaped cell 10 according to this embodiment is described with reference to Figs. 2 and 3. Fig. 2 is a plan view showing a structure of the sheet-shaped cell 10, and Fig. 3 is a cross-sectional view taken along the line III-III of Fig. 2.

The sheet-shaped cell 10 has a rectangular outer shape in the XY plane view. Further, the sheet-shaped cell 10 has an opening 31 in which the inside thereof is cut out. As shown in Fig. 3, the opening 31 penetrates the second electrode 17, the p-type oxide semiconductor layer 16, the charging layer 14, the n-type oxide semiconductor layer 13, and the substrate 11. In the XY plane view, although the outer shape of the opening 31 is rectangular, it can be formed into any shape, such as a circular one or a triangular one. In this example, a part of the substrate 11 other than the opening 31 comprises a base part 32. That is, the base part 32 is an uncut part of the substrate 11. The charging layer 14 and the like are formed on the base part 32.

Further, a dividing line 33 is formed in the sheet-shaped cell 10. The dividing line 33 is formed in a rectangular shape so that it surrounds the opening 31. The dividing line 33 divides the charging layer 14 and the positive electrode layer 22. A region inside the rectangular dividing line 33 is defined as an inner region 36, and a region outside the same is defined as an outer region 35. The inner region 36 is disposed so that it is included within the dividing line 33. Therefore, the inner region 36 is formed in a rectangular shape, and the outer region 35 is formed in a rectangular frame shape. The center of the inner region 36 coincides with the center of the opening 31. The charging layer 14 formed on the base part 32 in the outer region 35 is defined as an outer charging layer 14a, and the charging layer 14 formed on the base part 32 in the inner region 36 is defined as an inner charging layer 14b. The charging layer 14 is divided into the outer charging layer 14a and the inner charging layer 14b by the dividing line 33. The second electrode 17 formed above the outer charged layer 14a is a positive electrode, and the base part 32 disposed below the outer charged layer 14a is a negative electrode.

The dividing line 33 can be formed by laser irradiation. Specifically, a laser beam is irradiated from the positive electrode layer 22 side and the laser beam is scanned along the rectangular shape. The dividing line 33 divides the charging layer 14 and the positive electrode layer 22 into a pattern in the inner region 36 and a pattern in the outer region 35. That is, the positive electrode layer 22 and the inner charging layer 14b in the inner region 36 have a pattern in which they are separated from the positive electrode layer 22 and the outer charging layer 14a in the outer region 35. By forming the dividing line 33 in this way, the outer charging layer 14a in the outer region 35 and the inner charging layer 14b in the inner region 36 can be electrically insulated from each other. Note that as the capacity of the sheet-shaped cell 10 depends on the area of the outer region 35, the inner region 36 is preferably made as small as possible.

By forming the opening 31 in the inner region 36 of the sheet-shaped cell 10 as described above, it is possible to process the sheet-shaped cell 10 into a shape that matches the internal shape of a device in which the sheet-shaped cell 10 is to be installed. For example, when a case for housing the sheet-shaped cell 10 has a concave part and a convex part, the inner region 36 and the opening 31 are formed at a position corresponding to the convex part. Thus, it is possible to appropriately incorporate the sheet-shaped cell 10 in accordance with the shape of the device. It is not necessary to use a plurality of divided sheet-shaped cells 10, and the number of connecting parts can be thus reduced. Therefore, a manufacturing cost can be reduced.

The sheet-shaped cell 10 having the aforementioned structure can be manufactured in a shape corresponding to a device to be used. For example, in an electronic device incorporating a secondary cell, the sheet-shaped cell 10 is manufactured in accordance with the shape of a case of the electronic device. As the sheet-shaped cell 10 can be formed into any shape, the design qualities of the electronic device can be improved, and the size thereof can be reduced. For example, the sheet-shaped cell 10 is suitable for use in devices for which a reduction in size is required, such as wearable devices, and devices for which design qualities are required, such as electronic POP advertisements.

Further, the cell capacity can be increased by layering a plurality of sheet-shaped cells 10. That is, when the one sheet-shaped cell 10 is insufficient for the cell capacity with respect to the electronic device, a plurality of sheet-shaped cells 10 having the same shape are layered and disposed. Thus, it is possible to satisfy the cell capacity required for the electronic device.

Note that although the n-type oxide semiconductor layer 13 is divided by the dividing line 33 in Fig. 3, the n-type oxide semiconductor layer 13 may not be divided. That is, in the sheet-shaped cell 10, the second electrode 17, the p-type oxide semiconductor layer 16, and the charging layer 14 may be divided, and the n-type oxide semiconductor layer 13 and the substrate 11 may not be divided. Further, the dividing line 33 may be formed by film formation using a mask or the like instead of by laser irradiation.

### (Cell structure)

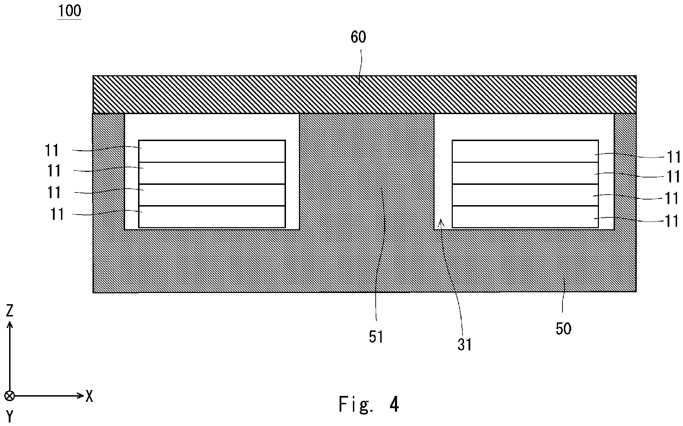

Fig. 4 shows a structure in which a plurality of sheet-shaped cells 10 are housed in a case. Fig. 4 is a sectional side view schematically showing a structure of a cell structure 100 including the sheet-shaped cell 10. The cell structure 100 includes a case 50, a cover 60, and the sheet-shaped cell 10. Note that in Fig. 4, although the number of layered sheet cells 10 is four, the number of layered sheets may be any number as long as it is two or more.

The case 50 houses a plurality of sheet-shaped cells 10. The plurality of sheet-shaped cells 10 may have the same shape and the same size or they may have different ones. Further, in the plurality of sheet-shaped cells 10, the openings 31 may have the same size, the same shape, and the same position or they may have different ones.

The case 50 has a convex part 51. Further, the convex part 51 is disposed in the opening 31 of the sheet-shaped cell 10, to thereby house the sheet-shaped cell 10 in the case 50. The cover 60 covers the front side (+Z side) of the case 50. The cover 60 is attached to the case 50. The sheet-shaped cell 10 is held between the cover 60 and the case 50 in a state in which the sheet-shaped cell 10 is spread.

By doing the above, it is possible to house the sheet-shaped cell 10 inside the case 50 without any space being wasted even when the case 50 has a concave part and a convex part. Contact with the convex part 51 of the case 50 can be avoided by providing the opening 31 at a position corresponding to the shape of the case 50. Accordingly, it is possible to hold the sheet-shaped cell 10 inside the case 50. In Fig. 4, as the number of convex parts 51 is one, the number of openings 31 is one. However, the number of convex parts 51 and the number of openings 31, respectively, may be two or more.

By doing the above, for example, it is not necessary to dispose the sheet-shaped cell 10 so as to avoid contact with the convex part 51 of the case 50. That is, it is not necessary to combine the sheet-shaped cells 10 having various shapes. Thus, according to the present invention, it is possible to use the integrated sheet-shaped cells 10, whereby it is possible to reduce the number of connecting parts. Further, according to the present invention, it is possible to appropriately dispose the sheet-shaped cell 10 in the case 50 having any given shape, whereby it is possible to improve the design qualities of the electronic device and reduce the size thereof.

As shown in Figs. 2 and 3, the inner charging layer 14b in the inner region 36 is insulated from the outer charging layer 14a in the outer region 35, and electric power is supplied only to the outer charging layer 14a in the outer region 35. Therefore, the cell capacity of the sheet-shaped cell 10 is substantially determined by the total amount of the outer charging layer 14a in the outer region 35. Accordingly, the capacity of the outer region 35 is determined in accordance with the cell capacity required for the electronic device in which the sheet-shaped cell 10 is disposed, and the number, the size, and the shape of the inner region 36 are determined. Further, the cell capacity can be increased by layering the sheet-shaped cells 10. That is, when the one sheet-shaped cell 10 is insufficient for the cell capacity with respect to the electronic device, a plurality of sheet-shaped cells 10 having the same shape are layered and disposed. Thus, it is possible to satisfy the cell capacity required for the electronic device.

### First Embodiment

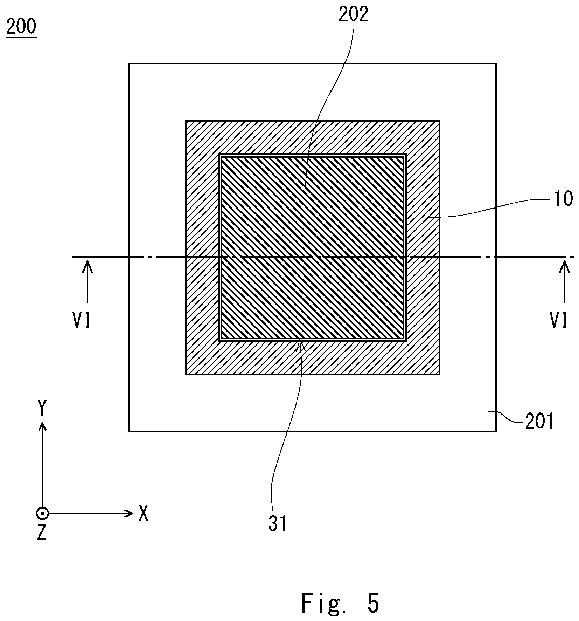

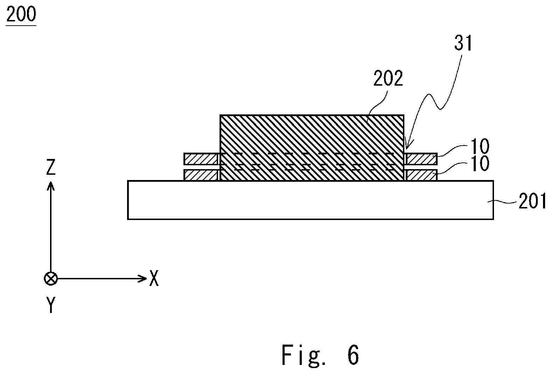

Next, a layering jig and a layering method for layering a plurality of sheet-shaped cells 10 are described with reference to Figs. 5 and 6. Fig. 5 is a top view showing a structure of a layering jig 200 according to a first embodiment, and Fig. 6 is a cross-sectional view taken along the line VI-VI of Fig. 5.

The layering jig 200 includes a pedestal 201 and a convex part 202 for alignment. The pedestal 201 serves as a stage on which the sheet-shaped cell 10 is placed. That is, a plurality of sheet-shaped cells 10 are layered on the upper surface of the pedestal 201. The plurality of sheet-shaped cells 10 have the same shape. That is, the outer shapes of the plurality of sheet-shaped cells 10 coincide with each other, and the sizes and the positions of the openings 31 also coincide with each other. Note that although the two sheet-shaped cells 10 are shown in Fig. 6, three or more sheet cells 10 may be layered.

The convex part 202 for alignment is provided on the pedestal 201. The convex part 202 for alignment projects from the upper surface of the pedestal 201 to the +Z side thereof. That is, the convex part 202 for alignment is higher than the upper surface of the pedestal 201. The height of the convex part 202 for alignment is larger than the total thickness of the sheet-shaped cells 10 to be layered.

The convex part 202 for alignment has a shape corresponding to the shape of the opening 31. That is, the opening 31 is rectangular, and accordingly the convex part 202 for alignment is rectangular. Further, the opening 31 and the convex part 202 for alignment are rectangular and have substantially the same size. Alternatively, in consideration of a manufacturing error or the like, the convex part 202 for alignment may be slightly smaller than the opening 31.

The sheet-shaped cells 10 are layered so that the convex part 202 for alignment is inserted into the opening 31 of each of the sheet-shaped cells 10. The edge of the sheet-shaped cell 10 on the opening 31 side comes into contact with the side surface of the convex part 202 for alignment, whereby a misalignment of the sheet-shaped cells 10 is restricted. Accordingly, it is possible to layer the sheet-shaped cells 10 in a state in which the openings 31 of the plurality of sheet-shaped cells 10 overlap each other. Thus, it is possible to layer the plurality of sheet-shaped cells 10 in a state in which the sheet-shaped cells 10 are aligned. Therefore, it is possible to appropriately layer the sheet-shaped cells 10.

Further, as the outer shape of the convex part 202 for alignment and the opening 31 have substantially the same shape, alignment in the X-axis direction and the Y-axis direction can be accurately performed. That is, it is possible to prevent a misalignment in the X and Y directions. Further, rotation in the rotational direction (the θ direction) around the Z axis is also restricted. This structure enables an accurate alignment. This structure further enables the sheet-shaped cells 10 to be appropriately layered.

Accordingly, it is possible to layer the sheet-shaped cells 10 in a state in which the openings 31 of the plurality of sheet-shaped cells 10 overlap each other. Thus, it is possible to layer the plurality of sheet-shaped cells 10 in a state in which the sheet-shaped cells 10 are aligned. In the XY plane view, it is possible to make the positions of the outer shapes of the plurality of sheet-shaped cells 10 coincide with each other.

Note that in the above embodiment, although the outer shape of the opening 31 is rectangular, it can be formed into any shape, such as a circular one or a triangular one. Further, the shape of the convex part 202 for alignment may be set in accordance with the shape of the opening 31.

### Second Embodiment

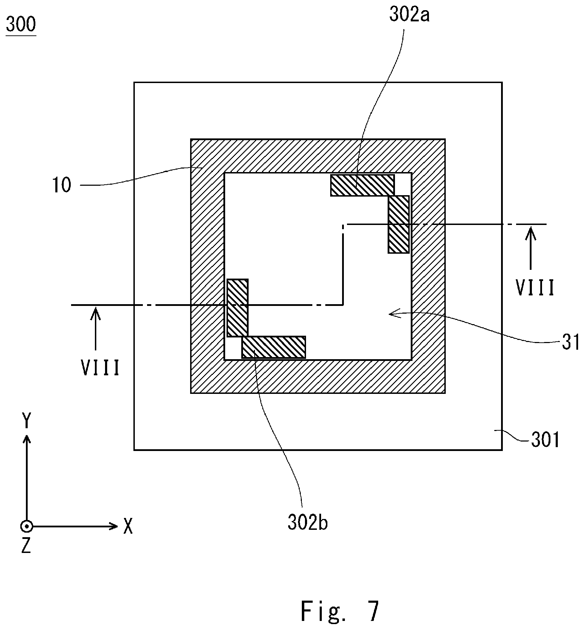

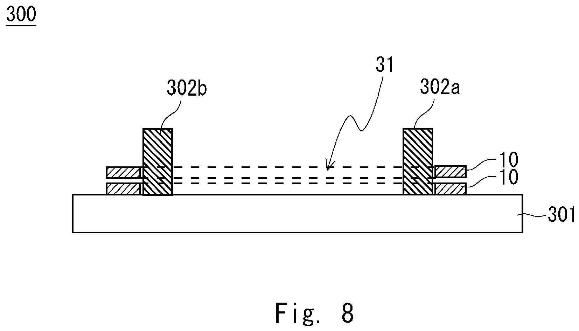

A layering jig and a layering method according to this embodiment are described with reference to Figs. 7 and 8. Fig. 7 is a top view schematically showing a structure of a layering jig 300 according to a second embodiment, and Fig. 8 is a cross-sectional view taken along the line XIII-XIII of Fig. 7. Note that descriptions of the contents that overlap with those of the first embodiment will be omitted as appropriate.

The layering jig 300 includes a pedestal 301, a convex part 302a for alignment, and a convex part 302b for alignment. The pedestal 301, like the pedestal 201, serves as a stage on which the sheet-shaped cell 10 is placed. That is, a plurality of sheet-shaped cells 10 are layered on the upper surface of the pedestal 301.

In this embodiment, the layering jig 300 includes the two convex parts 302a and 302b for alignment. The convex parts 302a and 302b for alignment are inserted into the one opening 31. The convex parts 302a and 302b for alignment are disposed so that they are spaced apart from each other in the diagonal direction of the opening 31. The two convex parts 302a and 302b for alignment are disposed near the diagonal corners of the opening 31. The sheet-shaped cells 10 are placed on the pedestal 301 so that the convex parts 302a and 302b for alignment are inserted into each of the openings 31 of the sheet-shaped cells 10. Thus, it is possible to layer the sheet-shaped cells 10 in a state in which the sheet-shaped cells 10 are aligned.

Each of the convex parts 302a and 302b for alignment has a shape in accordance with a part of the edge of the opening 31. The convex parts 302a and 302b for alignment are disposed at both ends of the opening 31 in the X direction, respectively. Specifically, in the X direction, one convex part 302a for alignment is disposed at one end of the opening 31, and the other convex part 302b for alignment is disposed at the other end of the opening 31. The convex part 302a for alignment enables prevention of a misalignment in the -X direction. The convex part 302b for alignment enables prevention of a misalignment in the +X direction and a misalignment in the +Y direction. Thus, it is possible to restrict a misalignment in the X direction.

In the Y direction, like in the X direction, one convex part 302a for alignment is disposed at one end of the opening 31, and the other convex part 302b for alignment is disposed at the other end of the opening 31. The convex part 302a for alignment enables prevention of a misalignment in the -Y direction. Further, the convex part 302b for alignment enables prevention of a misalignments in the +Y direction. Thus, it is possible to restrict a misalignment in the Y direction.

In the second embodiment, the rotation in the θ direction is also restricted. Accordingly, it is possible to perform an accurate alignment. This structure enables the sheet-shaped cells 10 to be appropriately layered. This structure further enables the sheet-shaped cells 10 to be layered in a state in which the openings 31 of the plurality of sheet-shaped cells 10 overlap each other. Thus, it is possible to layer the plurality of sheet-shaped cells 10 in a state in which the sheet-shaped cells 10 are aligned. In the XY plane view, it is possible to make the positions of the outer shapes of the plurality of sheet-shaped cells 10 coincide with each other.

Obviously, three or more convex parts for alignment may be disposed in the one opening 31. Alternatively, a misalignment of the sheet-shaped cells 10 may be restricted by one convex part for alignment extending in the diagonal direction. The number and the shape of the convex part for alignment are not limited to particular ones.

Further, this embodiment can support the openings 31 having various shapes and sizes. This embodiment makes it possible to layer the plurality of sheet-shaped cells 10 in a state in which the sheet-shaped cells 10 are aligned even when the sheet-shaped cells 10 have shapes and sizes different from each other. The side surface of the convex part for alignment comes into contact with the edge of the sheet-shaped cell 10 on the opening 31 side, whereby a misalignment is restricted. It is sufficient that the layering jig have one or more convex parts for alignment so that a misalignment of the sheet-shaped cells 10 is restricted. Specifically, the convex part for alignment having such a shape that misalignments in the X, Y, and θ directions are restricted is provided, and the number of the same may be one or more as long as misalignments in the X, Y, and θ directions are restricted.

For example, when the opening 31 has a rectangular shape or a polygonal shape in the XY plane view, it is sufficient that the convex parts 302a and 302b for alignment have shapes conforming with each side of the opening 31. By doing so, it is possible to prevent misalignments in the X, Y, and θ directions. Obviously, also in the case of the opening 31 having a shape other than a rectangular shape, it is possible to prevent misalignments by forming the convex parts 302a and 302b for alignment into appropriate shapes.

### Third Embodiment

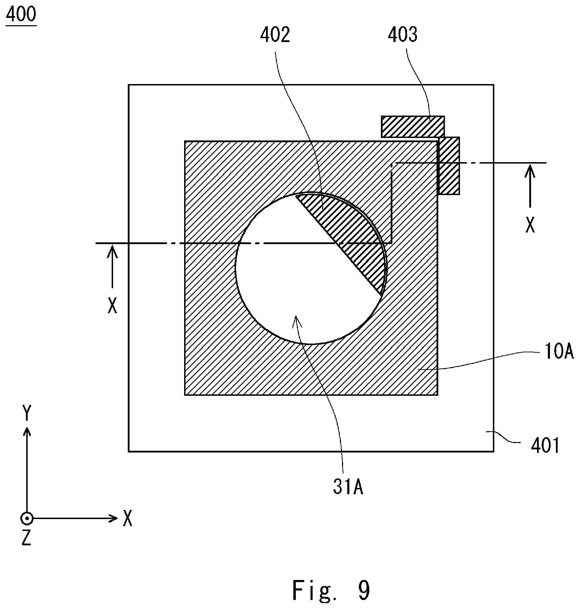

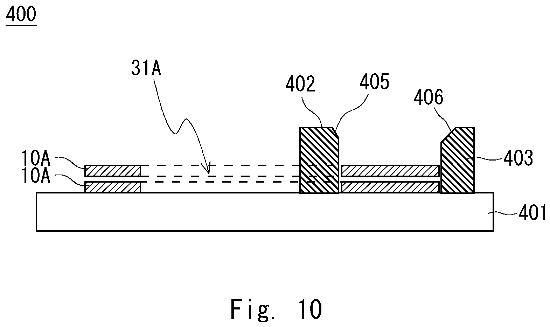

A layering jig and a layering method according to this embodiment are described with reference to Figs. 9 and 10. Fig. 9 is a top view schematically showing a structure of a layering jig 400 according to a third embodiment, and Fig. 10 is a cross-sectional view thereof. Note that descriptions of the contents that overlap with those of the first and the second embodiments will be omitted as appropriate.

The layering jig 400 includes a pedestal 401, a convex part 402 for alignment, and a convex part 403 for alignment. The pedestal 401, like the pedestal 201, serves as a stage on which a sheet-shaped cell 10A is placed. That is, a plurality of sheet-shaped cells 10A are layered on the upper surface of the pedestal 401.

In this embodiment, an opening 31A of the sheet-shaped cell 10A is circular in the XY plane view. Further, the two convex parts 402 and 403 for alignment are provided in the pedestal 401 in order to restrict rotation in the θ direction.

Like the convex part 302 for alignment etc., the convex part 402 for alignment is disposed in the opening 31A. That is, the sheet-shaped cells 10A are layered so that the convex part 402 for alignment is inserted into the openings 31A. The convex part 402 for alignment has a shape in accordance with a part of the edge of the opening 31A. The side surface of the convex part 402 for alignment comes into contact with the edge of the sheet-shaped cell 10A on the opening 31A side, whereby a misalignment of the sheet-shaped cell 10A is restricted.

Meanwhile, the convex part 403 for alignment is disposed outside the opening 31A. The convex part 403 for alignment has a shape in accordance with the outer shape of the sheet-shaped cell 10. Further, the side surface of the convex part 403 for alignment comes into contact with the outer edge of the sheet-shaped cell 10A, whereby a misalignment of the sheet-shaped cell 10A is restricted. In this example, the convex part 403 for alignment is disposed in the vicinity of the corner part of the sheet-shaped cell 10A. The side surface of the convex part 403 for alignment comes into contact with the outer edge of the sheet-shaped cell 10A, whereby a misalignment is restricted.

By doing the above, like in the first and the second embodiments, it is possible to layer the plurality of sheet-shaped cells 10A in a state in which the sheet-shaped cells 10A are aligned. The convex part 402 for alignment restricts misalignments in the -X and the -Y directions, and the convex part 403 for alignment restricts misalignments in the +X and the +Y directions.

Further, in this embodiment, a misalignment in the θ direction of the sheet-shaped cell 10 having the circular opening 31A can be prevented. For example, when the opening 31A has a circular shape, a misalignment in the θ direction cannot be prevented only by the convex part 402 for alignment. Further, even when the convex part 402 for alignment has a circular shape having substantially the same size as that of the opening 31A, the sheet-shaped cell 10A is rotated in the θ direction. Meanwhile, like in this embodiment, by combining the convex part 402 for alignment inside the opening 31A and the convex part 403 for alignment outside the opening 31A, it is possible to prevent a misalignment due to rotation in the θ direction.

Alignment of the sheet-shaped cells 10 is performed using the convex parts 402 and 403 for alignment. It is possible to layer the sheet-shaped cells 10 in a state in which the openings 31A of the plurality of sheet-shaped cells 10A overlap each other. Thus, it is possible to layer the plurality of sheet-shaped cells 10A in a state in which the sheet-shaped cells 10A are aligned. In the XY plane view, it is possible to make the positions of the outer shapes of the plurality of sheet-shaped cells 10A coincide with each other.

Further, a tapered part 405 and a tapered part 406 may be provided in the convex parts 402 and 403 for alignment, respectively. The tapered parts 405 and 406 provided in this way drop the sheet-shaped cells, so that alignment can be performed. Thus, it is possible to layer the sheet-shaped cells 10A more easily. Note that the tapered parts may also be provided in the convex parts 202 and 302 for alignment, respectively, in the structures of the first and the second embodiments. The tapered part may be provided only in one of the convex parts 402 and 403 for alignment.

### Example 1

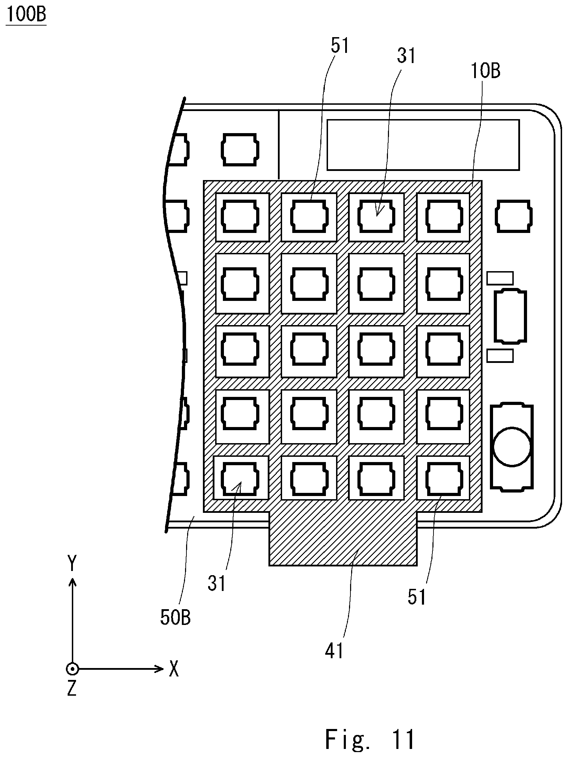

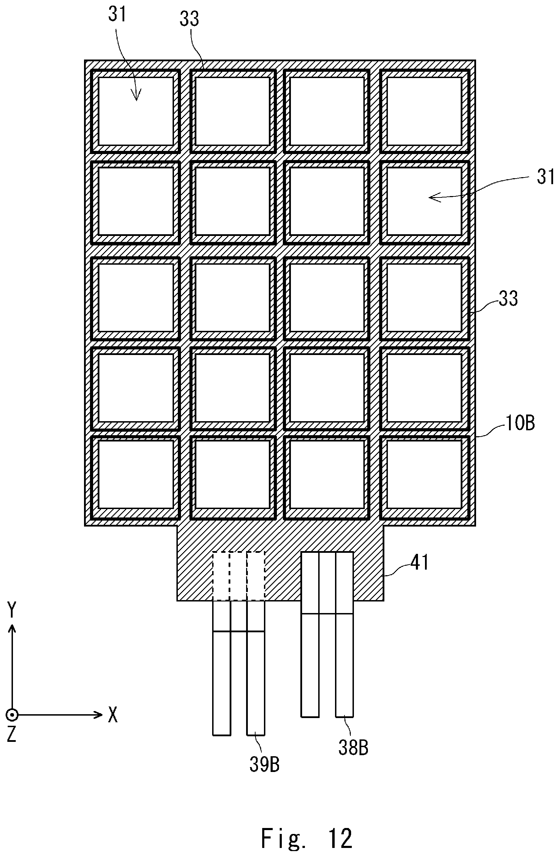

A sheet-shaped cell 10B and a cell structure 100B according to an example are described with reference to Figs. 11 and 12. Fig. 11 is a plan view schematically showing a structure of the cell structure 100B. Fig. 11 is a plan view schematically showing the structure of the sheet-shaped cell 10B used for the cell structure 100B. Note that in Fig. 11, the dividing line 33 provided in the sheet-shaped cell 10B is omitted. In Fig. 11, a tab lead 38B and a tab lead 39B are omitted.

Specifically, in an example 1, the sheet-shaped cell 10B is installed inside a keyboard (inside a case 50B) of a computer. The keyboard in which the sheet-shaped cell 10B is installed may be a wired or wireless keyboard.

The sheet-shaped cell 10B has such a size and a shape that the sheet-shaped cell 10B can be housed in the case 50B. The case 50B defines the outer shape of the keyboard and has a plurality of convex parts 51 of which the center thereof corresponds to the shape of the keyboard. For example, character keys, a numeric keypad, or the like of the keyboard are disposed on the convex parts 51. Accordingly, the case 50B has the plurality of convex parts 51 corresponding to the number of keys. Further, the sheet-shaped cell 10B has a plurality of openings 31 so that they avoid contact with the respective plurality of convex parts 51. The sheet-shaped cell 10B has a tab part 41 drawn out to the outside of the case 50B. The tab part 41 is extended to the - Y side.

As shown in Fig. 12, the tab leads 38B and 39B are connected to the tab part 41. The tab lead 38B of a positive electrode is stuck on the front surface of the sheet-shaped cell 10, and the tab lead 39B is stuck on to the back surface of the sheet-shaped cell 10. That is, the tab lead 38B of a positive electrode is connected to the second electrode 17 (see Fig. 1), and the tab lead 39B of a negative electrode is connected to the substrate 11 (see Fig. 1) which is the first electrode.

The above structure eliminates the need to provide a space dedicated to a cell in the case 50B. Thus, it is possible to improve the design qualities of the electronic device incorporating a cell and reduce the size thereof. In particular, by forming the opening 31 into a shape corresponding to characters and figures, it is possible to improve the design qualities. Further, it is possible to use the integrated sheet-shaped cells 10B in accordance with the shape of the case 50B. As the charging layer can be provided in the space between the convex parts 51, the space in the case 50B can be effectively used. The sheet-shaped cell 10B having the cell capacity required for the electronic device can be housed in the case 50B.

In the example 1, the sheet-shaped cell 10B has a plurality of openings 31. In this example, the 20 openings 31 are arranged in an array in the sheet-shaped cell 10B. That is, the four openings 31 are disposed in the X direction and the five openings 31 are disposed in the Y direction. Further, the 20 openings 31 have rectangular shapes of the same size.

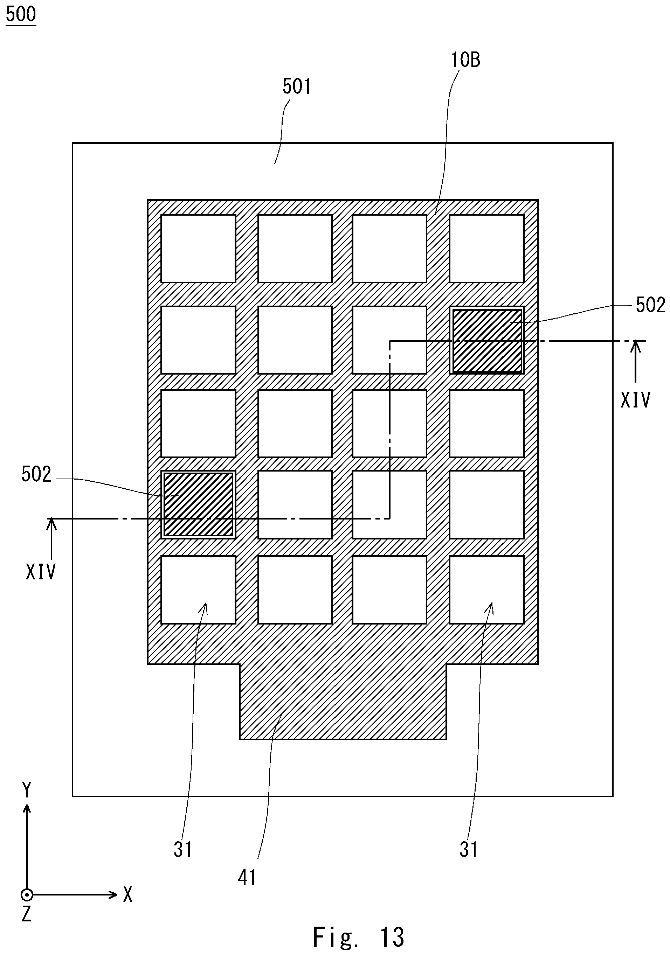

A layering jig for layering the above-described sheet-shaped cells 10B is described with reference to Figs. 13 and 14. Fig. 13 is a plan view showing a structure of a layering jig 500, and Fig. 14 is a cross-sectional view taken along the line XIV-XIV. Note that descriptions of the structures similar to those of the first to the third embodiments will be omitted as appropriate.

As described above, the plurality of openings 31 are provided in the sheet-shaped cell 10B. Two convex parts 502 for alignment are provided in the layering jig 500. The two convex parts 502 for alignment are formed on a pedestal 501. The two convex parts 502 for alignment are formed so that they are shifted from each other in the X and the Y directions.

The two convex parts 502 for alignment are inserted into the openings 31 different from each other. Further, each of the convex parts 502 for alignment has a shape corresponding to the shape of the opening 31 as in the case of the first embodiment. By this structure, it is possible to perform alignment of the sheet-shaped cells 10B.

Further, it is possible to prevent a deflection of the sheet cell 10B. For example, when the thickness of the substrate 11 is about 1 µm to 1 mm, a deflection of the sheet-shaped cell 10B is likely to occur. In particular, when a large number of openings 31 are formed, some places having a weak mechanical strength are formed, so that a deflection is more likely to occur. By disposing the convex parts 502 for alignment in the two or more openings 31, it is possible to eliminate the deflection of the sheet-shaped cell 10B. Accordingly, the sheet-shaped cell 10B is disposed on the pedestal 501 in a state in which no deflection has occurred in the sheet-shaped cell 10B. Thus, it is possible to appropriately layer the plurality of sheet-shaped cells 10B.

Obviously, the positions and the number of convex parts 502 for alignment are not limited to particular ones. For example, the layering jig 500 may have the three or more convex parts 502 for alignment. Further, the three or more convex parts 502 for alignment may be inserted into the openings 31 different from each other. Thus, it is possible to effectively prevent a deflection of the sheet-shaped cell 10B.

In the XY plane view, a plurality of the sheet-shaped cells 10B are layered in a state in which the positions of the outer shapes of the sheet-shaped cells 10A are made to coincide with each other. Therefore, it is possible to appropriately dispose the sheet-shaped cells 10B in the case 50B.

A combination of two or more structures of the first to the third embodiments and the example 1 can be used as appropriate. For example, in a structure in which a plurality of openings 31 are provided in the sheet-shaped cell 10B like in the example 1, the structure of the first embodiment may be applied to some openings 31, and the structure of the second embodiment may be applied to other openings 31. Further, in the first and the second embodiments and the example 1, a tapered part may be provided in the convex part for alignment.

In a manufacturing method for manufacturing the cell structure 100 as shown in Figs. 4 and 11, first, a plurality of sheet-shaped cells 10, each of which has the opening 31, are prepared. Then, the sheet-shaped cells 10 are placed one by one on the pedestal by using the aforementioned layering jig. In other words, the plurality of sheet-shaped cells are layered by inserting the convex part for alignment into the openings 31. The tab leads shown in Fig. 12 are connected to the layered sheet-shaped cells 10. After the tab leads are connected to the layered sheet-shaped cells 10, a plurality of layered sheet-shaped cells 10 are disposed in the case 50. In this way, the cell structure is completed. The sheet-shaped cells 10 are layered in a state in which they are aligned, and thus it is possible to easily arrange the sheet-shaped cells 10 in the case 50. Note that after the sheet-shaped cells are installed in the case, the tab leads may be connected thereto.

While examples of the embodiments according to the present invention have been described, the present invention includes appropriate modifications that do not impair objects and advantages thereof. Further, the present invention is not limited to the aforementioned embodiments.

This application is based upon and claims the benefit of priority from Japanese patent application No. 2018-14738, filed on January 31, 2018, the disclosure of which is incorporated herein in its entirety by reference.

### Reference Signs List

- 10: SHEET-SHAPED CELL
- 11: SUBSTRATE
- 13: N-TYPE OXIDE SEMICONDUCTOR LAYER
- 14: CHARGING LAYER
- 14a: OUTER CHARGING LAYER
- 14b: INNER CHARGING LAYER
- 16: P-TYPE OXIDE SEMICONDUCTOR LAYER
- 17: SECOND ELECTRODE
- 20: LAYERED BODY
- 21: NEGATIVE ELECTRODE LAYER
- 22: POSITIVE ELECTRODE LAYER
- 31: OPENING
- 32: BASE PART
- 33: DIVIDING LINE
- 35: OUTER REGION
- 36: INNER REGION
- 50: CASE
- 51: CONVEX PART
- 60: COVER
- 200, 300, 400, 500: LAYERING JIG
- 201, 301, 401, 501: PEDESTAL
- 202, 302, 402, 502: CONVEX PART FOR ALIGNMENT
- 403: CONVEX PART FOR ALIGNMENT

## Claims

1. A method for layering sheet-shaped cells, comprising:
a step of preparing a plurality of sheet-shaped cells, each of the sheet-shaped cells having an opening; and
a step of inserting a first convex part for alignment into the opening, thereby layering the plurality of sheet-shaped cells.

2. The method for layering sheet-shaped cells according to Claim 1, wherein in a plan view, the first convex part for alignment has a shape corresponding to a shape of the opening.

3. The method for layering sheet-shaped cells according to Claim 1, wherein a plurality of the first convex parts for alignment are inserted into the one opening.

4. The method for layering sheet-shaped cells according to any one of Claims 1 to 3, wherein
in a state in which the first alignment convex part is inserted into the opening, a second convex part for alignment is provided at a position corresponding to an outer edge of the sheet-shaped cell, and
alignment of the sheet-shaped cells is performed by using the first and the second convex parts for alignment.

5. The method for layering sheet-shaped cells according to any one of Claims 1 to 4, wherein
a plurality of openings are provided in the sheet-shaped cell, and
a plurality of the first convex parts for alignment are inserted into the openings different from each other.

6. The method for layering sheet-shaped cells according to any one of Claims 1 to 5, wherein
the sheet-shaped cell comprises:
a substrate having a base part and the opening;
a dividing line that surrounds the opening;
an inner charging layer formed at the base part of an inner region of the dividing line and an outer charging layer formed at the base part of an outer region of the dividing line; and
an electrode formed above the outer charging layer, and the outer and the inner charging layers are electrically insulated from each other by the dividing line.

7. A method for manufacturing a cell structure, comprising:
layering a plurality of sheet-shaped cells by the method for layering sheet-shaped cells according to any one of Claims 1 to 6 so that the openings overlap each other; and
housing the plurality of sheet-shaped cells in a case having a convex part inserted into the openings.

8. A layering jig comprising:
a pedestal on which a plurality of sheet-shaped are placed, each of the sheet-shaped cells having an opening; and
a convex part for alignment provided in the pedestal so that the convex part for alignment is inserted into the opening.
